# EUROPEAN PATENT SPECIFICATION

(11) **EP 0 905 096 B1**
(45) Date of publication and mention of the grant of the patent: **09.06.2004**
(21) Application number: 98117994.8
(22) Date of filing: 23.09.1998
(51) Int. Cl.: C03B 29/06, C03C 17/00, C03B 25/06, C03B 32/00, C03B 35/04

(54) **Method and apparatus for making and coating bottles**
Verfahren und Vorrichtung zur Herstellung und Beschichtung von Flaschen
Procédé et appareil pour fabriquer et revêtir des bouteilles

(30) Priority: 24.09.1997 JP 25831497; 08.10.1997 JP 27576797
(43) Date of publication of application: 31.03.1999
(73) Proprietor: KIRIN BEER KABUSHIKI KAISHA, Tokyo-To (JP)
(72) Inventor: Amano, Tsutomu, Chuo-ku, Tokyo-to (JP); Nakagawa, Manabu, Chuo-ku, Tokyo-to (JP); Imashita, Katsuhiro, Chuo-ku, Tokyo-to (JP); Oda, Asami, Shinnanyo-shi, Yamaguchi-ken (JP); Kobayashi, Yoshiyuki, Shinnanyo-shi, Yamaguchi-ken (JP); Nakamura, Katsuhisa, Shinnanyo-shi, Yamaguchi-ken (JP); Nagahiro, Kumao, Shinnanyo-shi, Yamaguchi-ken (JP)
(74) Representative: Liesegang, Eva

(56) References cited:
- DE-A- 3 428 973
- FR-A- 2 177 979
- US-A- 3 809 544
- US-A- 3 877 916

## Description

### FIELD OF THE INVENTION

The present invention relates to a bottle making method capable of uniformizing temperature distribution on the outer surface of a bottle during transportation of the bottle delivered from a bottle making machine to a hearth so that a coating process can satisfactorily be achieved, an apparatus for carrying out the bottle making method, and a bottle coating apparatus.

### DESCRIPTION OF THE RELATED ART

A glass bottle formed by a bottle making machine by blow molding in a bottle-shape having a neck, a shoulder, a body and a bottom maintains a surface temperature of 500°C or above on a conveyor for conveying the glass bottle to a lehr. An oxide coating, such as a coating of SnO₂, TiO₂ or the like, can be formed over the outer surface of the bottle by placing a tunnel-shaped hood over the conveyor conveying the bottle to the lehr, and filling the interior of the hood with a substance capable of making hydrolysis or oxidation a temperatures of 500°C or above to produce an oxide, such as SnCl₄, an organic tin compound, TiCl₄, titanium alkoxide or the like. The oxide coating the outer surface of the bottle can prevent the development of microcracks, which is a principal cause of reduction in the strength of glass, and therefore the thickness of the glass necessary for securing the strength can be reduced. A process of coating the outer surface of a glass bottle with such an oxide coating is called a hot-end coating process which contributes to producing lightweight glass bottles.

Glass bottles are classified into two groups, i.e., a group of one-way bottles which are not supposed to be recovered and reused, and a group of returnable bottles which are supposed to be recovered and refilled for reuse, such as beer bottles, sake bottles and the like. Returnable bottles are cleaned by a hot-alkali cleaning process before reuse. The hot-end coating process has not been applied to making returnable bottles because a coating formed on the outer surface of a bottle by the hot-end coating process comes off when the bottle is subjected to the hot-alkali cleaning process. JP-A No. 3-131547 discloses a technique capable of forming a coating which withstands hot-alkali cleaning by keeping the surface of a glass bottle at temperatures in the range of 550°C to 700°C during a coating process and controlling process conditions so that a coating of a thickness in the range of 400 to 1000 Å.

When making bottles by a general bottle making machine, time necessary for molded bottles to reach a coating hood, in which the bottles are exposed to the atmosphere for cooling, is dependent on the type of a mold employed in molding the bottles. Therefore, the surface temperature of the bottles during a coating process is dependent on the type of the mold and hence it is difficult to control the temperature of the bottles properly. Particularly, if a bottle has a locally thick part (settle line) formed during blow molding, irregularity in surface temperature distribution will further be increased.

A bottle transporting method proposed in JP-A No. 6-157062 fixes time between the delivery of a molded glass bottle on a conveyor and the entrance of the same into a lehr regardless of the type of a mold employed to achieve appropriate temperature control. This previously proposed bottle transporting method is capable of removing the surface temperature difference between glass bottles during coating formation attributable to the difference between the types of molds used for molding the glass bottles. However, different parts in a glass bottle have different temperatures, respectively, and some parts of a glass bottle do not meet the temperature condition specified in JP-A No. 3-131547.

If a glass bottle has a locally thick part of an excessively high temperature, it is possible that part of the coating formed on the locally thick part comes off when the glass bottle is subjected to the hot-alkali cleaning process even if the foregoing temperature condition is satisfied.

### SUMMARY OF THE INVENTION

It is an object of the present invention to provide a bottle making method capable of avoiding a temperature distribution in a wide temperature range on the outer surface of a bottle attributable to the uniform heating of the bottle, and of maintaining the entire outer surface of a bottle at temperatures in a desired temperature range, an apparatus for carrying out the bottle making method, and a bottle coating apparatus.

This problem is solved by the bottle making method of claim 1 and the bottle making apparatus of claim 3.

In a preferred embodiment the apparatus of claim 3 additionally comprises a bottle coating chamber; a blowing chamber disposed near the bottle processing chamber; a suction chamber disposed near the bottle processing chamber; and a circulation blower disposed between the blowing chamber and the suction chamber to circulate a process gas sequentially through the blowing chamber, the bottle coating chamber and the suction chamber; wherein the blowing chamber is provided with a blowing opening opening into the bottle coating chamber, the chamber is provided with a suction opening opening into the bottle coating chamber, and the blowing opening of the blowing chamber is on a level below a level corresponding to the center of gravity of the bottle.

### BRIEF DESCRIPTION OF THE DRAWINGS

Fig. 1 is a side view of a bottle making apparatus in a preferred embodiment according to the present invention;
Fig. 2 is a front view of the bottle making apparatus of Fig. 1;
Fig. 3 is a typical view of assistance in explaining the operation of the bottle making apparatus of Fig. 1;
Fig. 4 is a graph showing surface temperature distribution on a bottle made by a bottle making method in accordance with the present invention;
Fig. 5 is a half-sectional view of a bottle to be made by the bottle making apparatus of the present invention;
Fig. 6(A) is a schematic perspective view of a bottle coating apparatus in a preferred embodiment according to the present invention;
Fig. 6(B) is a perspective view of blowing openings and suction openings formed in the bottle coating apparatus of Fig. 6(A);
Fig. 6(C) is a sectional view of assistance in explaining currents produced by a circulation blower;
Fig. 7(A) is a schematic perspective view of a bottle coating apparatus in another embodiment according to the present invention;
Fig. 7(B) is a perspective view of blowing openings and suction openings formed in the bottle coating apparatus of Fig. 7(A); and
Fig. 7(C) is a sectional view of assistance in explaining currents produced by a circulation blower.

### DESCRIPTION OF THE PREFERRED EMBODIMENTS

### First Embodiment

A bottle making apparatus in a first embodiment according the present invention will be described with reference to the accompanying drawings.

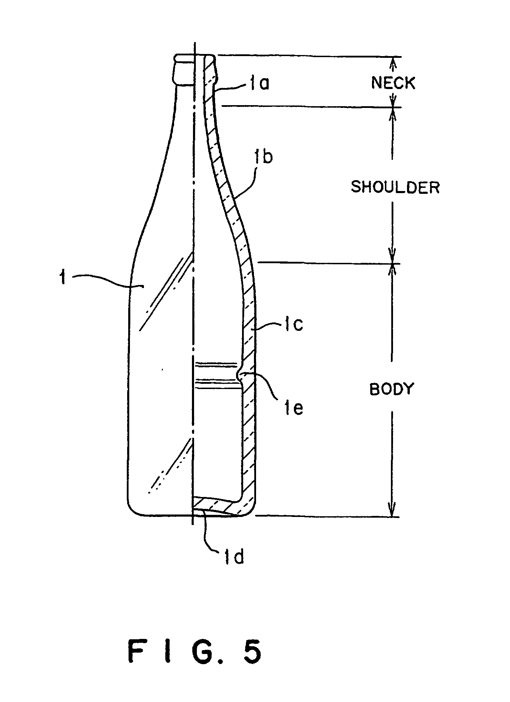

Referring to Fig. 5 showing a glass bottle 1 formed by blow molding in a half-sectional view, the bottle 1 has a neck 1a of a great wall thickness, a shoulder 1b of a wall thickness which becomes smaller downward, a cylindrical body 1c continuous with the shoulder 1b, and a bottom 1d. The neck 1a is formed first when making the bottle 1 by blow molding. Therefore, the neck 1a and the shoulder 1b cool more than the body 1c and the temperatures of the neck 1a and the shoulder 1b are lower than that of the body 1c when the bottle 1 is formed completely. Generally, a longitudinally elongate bottle, such as a beer bottle, is made by two-stage blow molding. Therefore, if the bottle 1 is a longitudinally elongate one, it often occurs that a settle line 1e having a great thickness is formed in a middle part of the body 1c, and the temperature of the settle line 1e remains higher than those of other parts of the bottle 1.

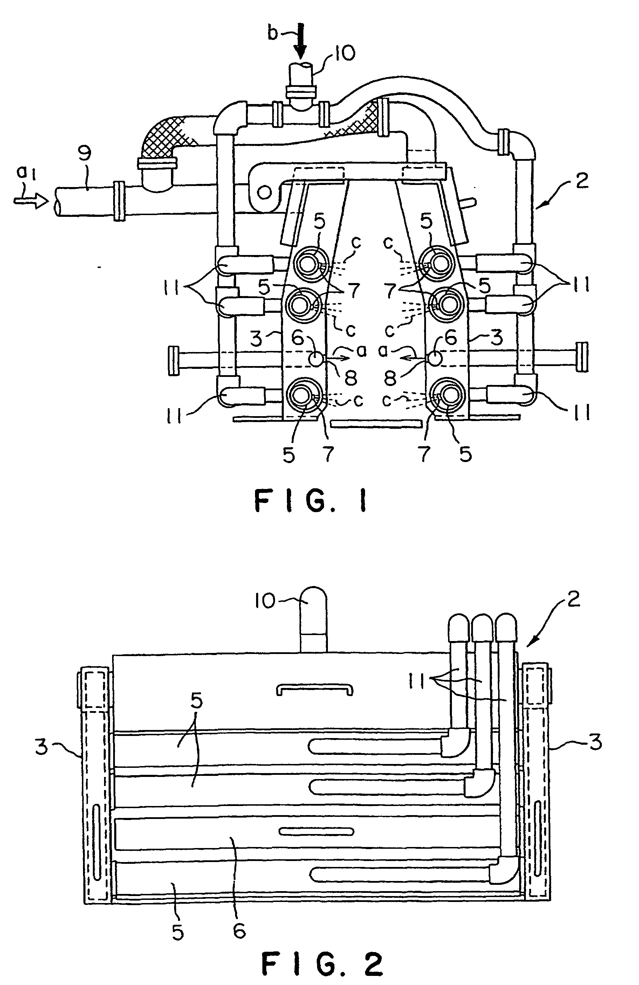

In view of such a fact, a bottle making apparatus 2 in a first embodiment according to the present invention heats and cools parts of the bottle 1 according to a temperature distribution on the bottle 1. Referring to Figs. 1 and 2 showing the bottle making apparatus 2 has hollow, gantrylike frames 3 fixedly installed at a predetermined interval of, for example, about 800 mm with respect to a direction in which the bottle 1 is conveyed so as to straddle a bottle conveying path. Each of the frames 3 has opposite inner walls having parallel lower parts defining a space conforming to a lower part of the external shape of the bottle 1, and upper parts inclined toward each other so as to define an upward tapered space conforming to an upper part of the external shape of the bottle 1. The bottle 1 is conveyed by a conveyor 4 through the space defined by the gantrylike frames 3. Burner pipes 5 are extended horizontally on levels corresponding to the neck 1a, the shoulder 1b and a lower part of the body 1c of the bottle 1, respectively. Cooling pipes 6 are extended on a level corresponding to the settle line 1e. Each burner pipe 5 is provided with, for example, 10 burners 7 arranged at equal intervals and opening toward the bottle 1 conveyed through the gantrylike frames 3, and each cooling pipe 6 is provided with, for example, 10 air blowing openings 8.

Combustion air **a**_{**1**} is supplied through an air pipe 9 and the gantrylike frames 3 to the burner pipes 5. A fuel gas **b**, such as LPG, is supplied through a fuel pipe 10 and branch pipes 11 branched from the fuel pipe 10 to the burners 7. The burners 7 blow flames **c** against the bottle 1. Cooling air **a** is blown through the air blowing openings 8 toward the settle line 1e of the bottle 1. Heat generating rate at which the burners 7 attached to the burner pipes 5 generate heat and air blowing rate at which the cooling air a is blown through the air blowing opening of the cooling pipe 6 are controlled so that the bottle 1 has a uniform surface temperature distribution. Particularly, even if the settle line 1e is formed by blow-and-blow molding, the settle line 1e can surely be cooled to reduce the irregularity of the surface temperature distribution of the bottle 1.

### Example

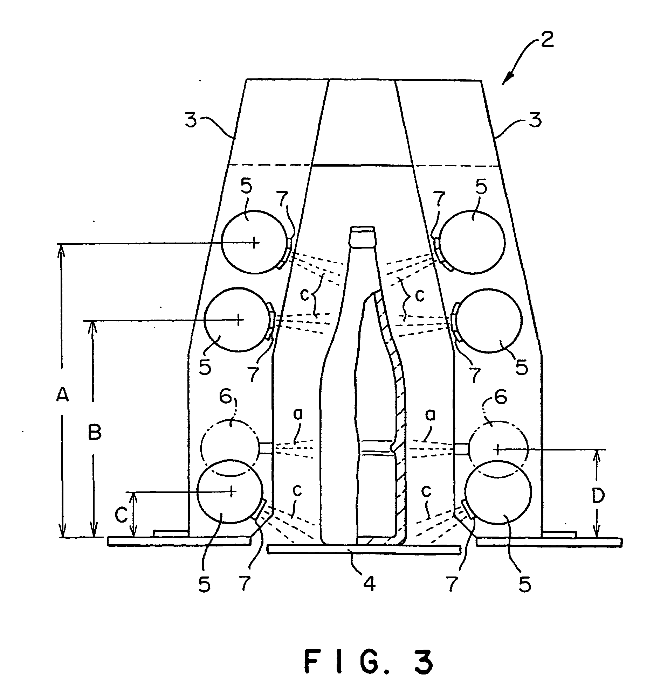

The bottle making apparatus 2 of the present invention was installed so as to straddle the conveyor 4 as shown in Fig. 3. The conveyor 4 conveyed glass bottles of 475 g in weight, 289 mm in height and 74 mm in maximum outside diameter at intervals of 133 mm at a velocity of 11.4 m/min. The top burner pipes 5 were disposed at a height A of 220 mm, the middle burner pipes 5 were disposed at a height B of 170 mm and the bottom burner pipes 5 were disposed at a height C of 10 mm, and respective positions of the burners 7 of the top, the middle and the bottom burner pipes 5 were adjusted so as to blow flames c to the neck 1a, the shoulder 1b and the bottom 1d of each bottle 1, respectively. The fuel gas **b** was burnt by the burners 7 of the top, the middle and the bottom burner pipes 5 at heat generating rates of 30,000 kcal/hr, 23,000 kcal/hr and 20,000 kcal/hr, respectively. The cooling pipes 6 were disposed at a height D of 80 mm, and 0.7 kg/cm² compressed air a was blown against a part of each bottle 1 around the settle line 1e for cooling.

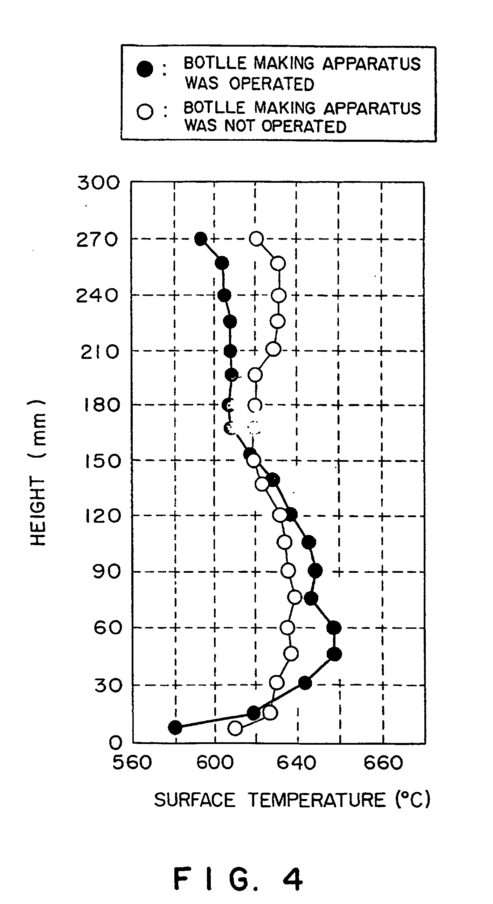

Surface temperatures of the glass bottles 1 were measured at the exit of the bottle making apparatus with radiation thermometers. Measured temperatures of parts of the bottle 1 when the bottle manufacturing apparatus 2 was not operated and those of the same parts of the bottle 1 when the bottle making apparatus 2 was operated are shown comparatively in Fig. 4. As is obvious from Fig. 4, the temperature of the bottle increases sharply to a height of 60 mm, decreases gradually from a height of 90 mm upward and the temperature reaches a maximum at the height of 60 mm when the bottle making apparatus 2 was not operated. When the bottle making apparatus was operated, the temperatures of parts of the bottle at a height of 170 mm or above were increased by heating, and the temperature decreases by cooling to change gently in part of the bottle around the height of 60 mm.

The bottle processed by the bottle making apparatus 2 for surface temperature distribution control and the bottle not processed by the bottle making apparatus 2 were coated with a 800 Å thick SnO₂ coating. The surfaces of the bottles coated with the SnO₂ coating were examined after immersing the bottles in a 4% NaOH solution of 80°C for six hours. The bottle processed by the bottle making apparatus 2 of the present invention assumed a whitish appearance and the SnO₂ coating did not come off at all. In the bottle not processed by the bottle making apparatus 2 of the present invention, parts of the SnO₂ coating formed on a part around a height of 100 mm of the bottle came off, and a part of the SnO₂ coating formed on a part of the bottle above the height of 170 mm was deteriorated significantly, and a part of the SnO₂ coating formed on a part of the bottle above a height of 240 mm came off.

As is apparent from the foregoing description, the present invention employs the cooling means corresponding to a part having an increased wall thickness of the glass bottle formed just now having the neck, the shoulder, the body and the bottom, and the heating means corresponding to the body excluding the part having an increased wall thickness, the neck and the shoulder of the glass bottle. Thus, the surface temperature distribution on the entire glass bottle is uniform, and therefore the local exfoliation of a coating formed over the outer surface of the glass bottle in the following process does not occur at all.

### Second Embodiment

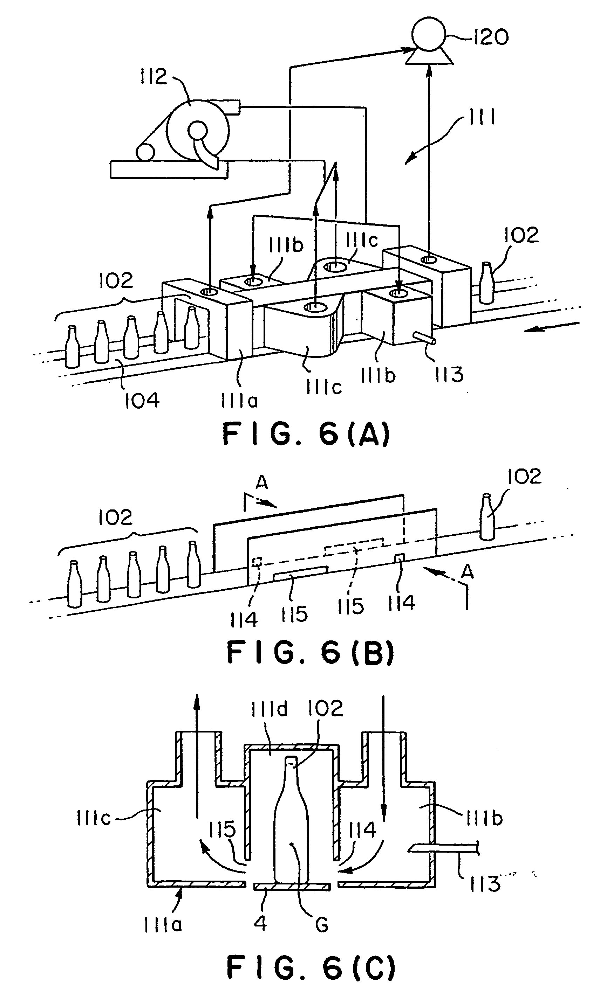

Fig. 6(A) is a schematic perspective view of a bottle coating apparatus 111 comprised by the apparatus according to the present invention, Fig. 6(B) is a perspective view of blowing openings and suction openings formed in the bottle coating apparatus 111 of Fig. 6(A), and Fig. 6(C) is a sectional view of assistance in explaining currents produced by a circulation blower.

Referring to Fig. 6(A), glass bottles 102 formed by blow molding are arranged in a row on a conveyor 104, and the conveyor 104 conveys the glass bottles 102 from the right toward the left as viewed in Fig. 6(A). The bottle coating apparatus 111 has a chamber block 111a fixedly installed so as to straddle the conveyor 104, and a large circulation blower 112. The chamber block 111a has a longitudinal channel through which bottles 102 are conveyed by the conveyor 104. The chamber block 111a has four connecting openings (middle openings) connected to the large circulation blower 112, and a front and a back connecting opening connected to an exhaust blower 120. The chamber block 111a has a bottle coating chamber 111d through which the bottles 102 are conveyed, blowing chambers 111b, and suction chambers 111c. Process gas inlets 113 are formed in lower parts of side walls of the blowing chambers 111b. The blowing chambers 111b and the suction chambers 111c of the chamber block 111a adjoin the bottle coating chamber 111d, and each blowing chamber 111b and the suction chamber 111c corresponding to the blowing chamber 111b are disposed opposite to each other on the opposite sides of the bottle coating chamber 111d, respectively.

Fig. 6(B) shows the bottle coating apparatus 111 of Fig. 6(A), in which the chamber block 111, excluding partition walls separating the blowing chambers 111b and the suction chambers 111c of the chamber block 111a from the bottle coating chamber 111d, is removed. The blowing chamber 111b is provided with an air blowing opening 114 through which air blown by the circulation blower 112 is blown into the bottle chamber 111d. The suction chamber 111c is provided with a suction opening 115 through which air is sucked from the bottle chamber 111c.

Fig 6(C) is a sectional view taken on line A-A in Fig. 6(B). Referring to Fig. 6(C), air blown by the circulation blower 112 flows as indicated by the downward arrows, and mixes with a process gas supplied through the process gas inlets 113 in the blowing chambers 111b to produce a mixed gas. The mixed gas flows from the blowing chambers 111b to the bottle coating chamber 111d through the air blowing openings 114 and then flows into a space surrounding the glass bottles 102 being conveyed by the conveyor 104 to form a coating on the outer surfaces of the glass bottles 102. Then, the used mixed gas is sucked through the suction openings 115 into the suction chambers 111c and flows as indicated by the upward arrows to the circulation blower 112. Thus, the mixed gas blown by the circulation blower 112 circulates through the bottle coating apparatus. The process gas is a gas of a substance capable of making hydrolysis or oxidation at temperatures in the temperature range suitable for oxide film formation to produce an oxide, such as SnCl₄, an organic tin compound, TiCl₄, titanium alkoxide or the like. The process gas fills up the bottle coating chamber 111d and forms an oxide coating, such as a SnO₂ coating or a TiO₂ coating, on the surfaces of the bottles 102. The oxide coating formed on the surfaces of the bottles 102 prevents the development of microcracks, which is a principal cause of reduction in the strength of glass, and hence the thickness of the wall of the glass bottle necessary for securing sufficient strength can be reduced.

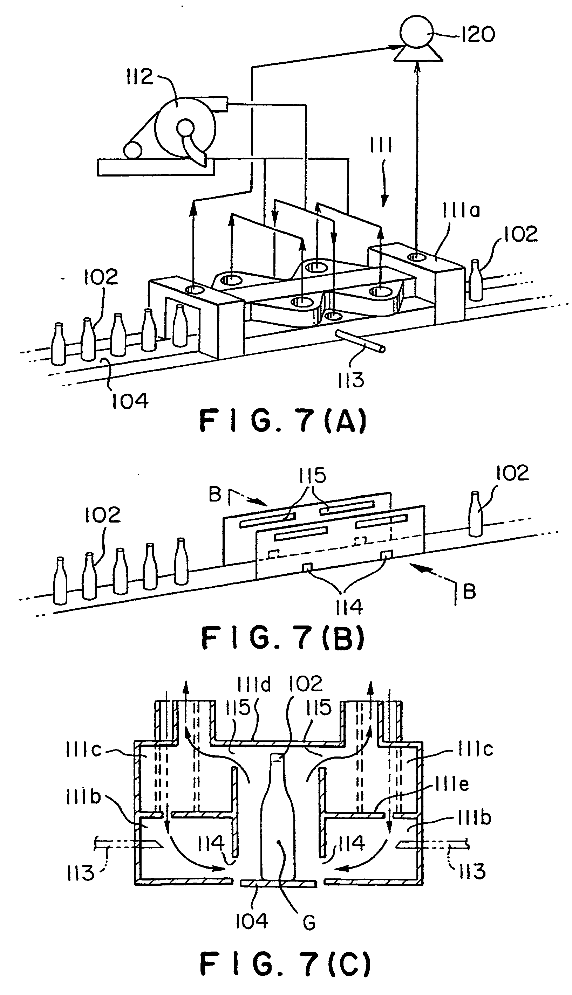

Fig. 7(A) is a schematic perspective view of a bottle coating apparatus 111 in anohter embodiment according to the present invention, Fig. 7(B) is a perspective view of blowing openings and suction openings formed in the bottle coating apparatus 111 of Fig. 7(A), and Fig. 7(C) is a sectional view taken on line B-B in Fig. 7(B) of assistance in explaining currents produced by a circulation blower. The bottle coating apparatus in the embodiment shown in Figs. 7(A)-7(C) is similar in construction to the bottle coating apparatus in the second embodiment shown in Figs. 6(A) - 6(C), excepting that the bottle coating apparatus in Figs. 7(A) - 7(C)differs from the bottle coating apparatus in Figs. 6(A) - 6(C) in the arrangement of blowing chambers and suction chambers. Whereas the bottle coating apparatus shown in Figs. 6(A) - 6(C) is provided with the chamber block 111a having the blowing chambers 111b and the suction chambers 111c disposed on the same level opposite to each other on the opposite sides of the bottle coating chamber 111d, respectively, the bottle coating apparatus shown in Figs. 7(A) - 7(C) has chamber sets each consisting of a blowing chamber 111b and a suction chamber 111c so that the blowing chamber 111b underlies the suction chamber 111c, and the blowing chamber 111b and the suction chamber 111c are separated by a partition wall 111e, and the chamber sets are disposed opposite to each other on the opposite sides of a bottle coating chamber 111d, respectively. In the bottle coating apparatus in Figs. 7(A) - 7(C), air blown by a circulation blower 112 flows as indicated by the downward arrows, mixes with a process gas supplied through process gas inlets 113 in the blowing chambers 111b to produce a mixed gas. The mixed gas flows from the blowing chambers 111b to the bottle coating chamber 111d through air blowing openings 114 and then flows into a space surrounding glass bottles 102 being conveyed by a conveyor 104 to form a coating on the outer surfaces of the glass bottles 102. Then, the used mixed gas is sucked through suction openings 115 into the suction chambers 111c and flows as indicated by the upward arrows to the circulation blower 112. Thus, the air blown by the circulation blower 112 circulates through the bottle coating apparatus.

In Figs. 6(A) - 6(C) and Figs. 7(A) - 7(C), if the bottle 102 is subjected to temperature control immediately before the bottle 102 reaches the entrance of the bottle coating apparatus, the surface temperature of the bottle 102 will be higher than that of the bottle 102 which is subject to a hot-end coating process. Accordingly, very rapid rising air currents flow along the outer surface of the bottle 102. The velocity of such rising air currents is high enough to form an alkali-proof coating, and hence a highly alkali-proof coating can be formed by supplying a process gas together with the rising air currents.

In Figs. 6(A) - 6(C) and Figs. 7(A) - 7(C), the blowing openings 114 are formed on a level below that of the center G of gravity of the bottle 102 so that the bottle 102 may not be caused to tumble over by air blown through the blowing openings 114. The area of the blowing opening 114 is determined so as to correspond to the blowing capacity of the circulation blower 112 so that a uniform, highly alkali-proof coating may be formed. The correspondence of the area of the blowing openings 114 to the blowing capacity of the circulation blower 112 is dependent on the weight, height, outside diameter of the bottle 102 and processing rate at which the bottle coating apparatus processes bottles. The area of the blowing openings 114 is quite different from that for ordinary hot-end coating. For example, the sum of the areas of the blowing openings 114 is in the range of 3000 to 30,000 mm², which is in the range of 1/5 to 1/2 of the sum of the areas of blowing openings in an ordinary coating apparatus. The blowing capacity of the circulation blower 112 is in the range of 5 to 20 m³/min, which is about twenty times the blowing capacity of a circulation blower employed in an ordinary coating apparatus.

The suction openings 115 of the bottle coating apparatuses shown in Figs. 6(B) and 7(B) have the shape of a horizontally elongate rectangle, and the area of the suction openings 115 is in the range of three to twenty times that of the blowing openings 114.

### Examples for coating a bottle

Bottles 102 were coated with an oxide coating by the bottle coating apparatus shown in Figs. 6(A) to 6(C). The surface temperature of the bottles 102 was adjusted to temperatures of 620±20°C while the bottles 102 arranged at intervals of 133 mm on the conveyor 104 were being conveyed by the conveyor 104. SnCl₄ gas was used as a process gas, and the area of the blowing openings 114 and the flow of air blown by the circulation blower 112 were varied. The flow of the process gas was regulated so that a coating of a thickness in the range of 40 to 100 nm was formed. The condition of the coatings thus formed on the bottles 102 was examined after immersing the bottles 102 in a 4% NaOH solution for six hours. Results of examination are tabulated in Table 1.

It was decided that coatings having parts of a thickness greater than 130 nm were referred to as bad in "coating uniformity", that coatings having coming-off parts that had an area not greater than 1/50 of the total area were referred to as good in "alkali resistance", and that the bottles which were not moved by circulating air on the conveyor were referred to as good in "stability on conveyor".

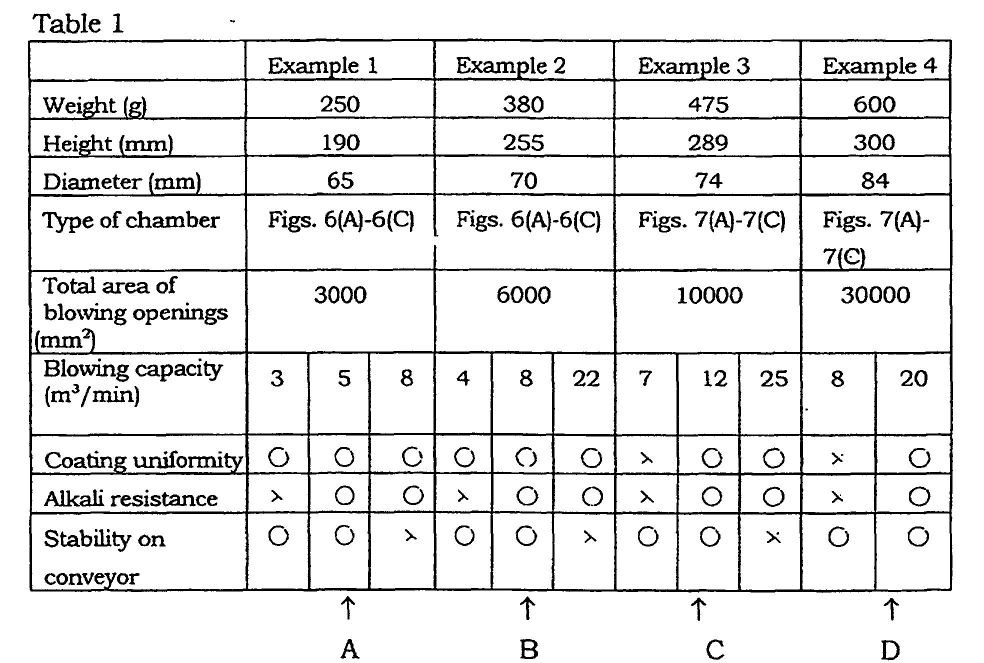

It is known from Table 1 that the thickness of the coatings is uniform, the alkali resistance of the coatings is satisfactory and the bottles 102 are stable on the conveyor when the sum of the areas of the blowing openings is in the range of 3000 to 30000 mm², the blowing capacity is in the range of 5 - 20 m³/min, and conditions indicated at A in Example 1, at B in Example 2, at C in Example 3 and at D in Example 4 are selected.

As is apparent from the foregoing description, the bottle coating apparatus according to the present invention has the blowing chambers 111b formed near the conveyor 104 for conveying the bottles 102, each provided with the blowing opening 114, the suction chambers 111c formed near the conveyor 104 for conveying the bottles 102, each provided with the suction opening 115 and the circulation blower 112 connected to the blowing chambers 111b and the suction chambers 111c. The blowing opening 114 is formed on a level below that of the center G of gravity of the bottles 102. Thus, the bottle coating apparatus can stably carry out the coating process for coating the bottles 102.

The bottles can be coated with a satisfactory coating by forming the blowing openings in an area so that the sum of the areas is in the range of 3000 to 30000 mm², by employing the circulation blower of a capacity in the range of 5 to 20 m³/min, and by using optimum values in those ranges in combination.

## Claims

1. A bottle making method for making a bottle (1) having a neck (1a), a shoulder (1b), a body (1c) and a bottom (1d) by blow molding, **characterized by**
cooling a part (1e) of the body (1c) of the bottle (1) still being hot from the foregoing blow molding which has a thickness greater than that of the other parts of the body after the bottle has been formed; and simultaneously heating the other parts of the body, the neck, the shoulder and the bottom, such that the surface temperature distribution of the bottle lies within a desired temperature range.

2. The bottle making method according to claim 1, wherein the part of the body of the bottle formed during blow molding of the bottle which has a thickness greater than that of the other parts of the body is a settle line (1e).

3. A bottle making apparatus for making a bottle by a method according to claim 1, **characterized by**
cooling means (6,8) for cooling a part (1e) of the body (1c) of the bottle (1), said part (1c) having a thickness greater than that of the other parts of the body; and
heating means (5,7) for simultaneous heating of the other parts of the body, the neck, the shoulder and the bottom.

4. The bottle making apparatus according to claim 3, wherein the cooling means (6) is disposed on a level corresponding to that of a settle line (1e) formed in the body (1c) of the bottle (1).

5. The bottle making apparatus according to claim 3 or 4, wherein a bottle coating chamber (111d) is provided;
a blowing chamber (111b) is disposed near the bottle coating chamber (111d);
a suction chamber (111c) is disposed near the bottle coating chamber (111d); and
a circulation blower (112) is disposed between the blowing chamber (111b) and the suction chamber (111c) to circulate a process gas sequentially through the blowing chamber (111b), the bottle coating chamber (111d) and the suction chamber (111c); and
wherein the blowing chamber (111b) is provided with a blowing opening (114) opening into the bottle coating chamber (111d), the suction chamber (111c) is provided with a suction opening (115) opening into the bottle coating chamber (111d) and the blowing opening (114) of the blowing chamber is on a level below a level corresponding to the center of gravity of the bottle (1).

6. The bottle making apparatus according to claim 5, wherein the sum of the area of the blowing opening (114) is in the range of 3000 to 30000 mm².

7. The bottle making apparatus according to claim 5 or 6, wherein the suction opening (115) has a horizontally elongate shape, and the area of the suction opening is in the range of 3 to 20 times of that of the blowing opening (114).

8. The bottle making apparatus according to claim 5, 6 or 7, wherein the circulation blower (112) has a capacity to blow a process gas through the blowing opening at a flow rate in the range of 5 to 20 m³/min.

9. The bottle making apparatus according to one of claims 5 to 8, wherein said blowing chamber (111b) and said suction chamber (111c) are disposed opposite to each other on the opposite sides of the bottle coating chamber (111d), respectively.

10. The bottle making apparatus according to one of claims 5 to 9, wherein another blowing chamber and another suction chamber are provided, each suction chamber overlies the blowing chamber corresponding to the suction chamber to form a chamber set together with the blowing chamber, and the chamber sets are disposed opposite to each other on the opposite sides of the bottle coating chamber, respectively.

## Patentansprüche

1. Verfahren zum Herstellen einer Flasche (1) mit einem Hals (1a), einer Schulter (1b), einem Körper (1c) und einem Boden (1d) durch Blasformen, **dadurch gekennzeichnet, daß**
ein Teil (1e) des Körpers (1c) der noch von dem vorangegangenen Blasformen warmen Flasche (1) abgekühlt wird, welcher Teil dicker als die anderen Teile des Körpers ist, nachdem die Flasche geformt worden ist; und die anderen Teile des Körpers, des Halses, der Schulter und des Bodens gleichzeitig erwärmt werden, so daß die Oberflächentemperaturverteilung der Flasche innerhalb eines gewünschten Temperaturbereichs liegt.

2. Flaschenherstellungsverfahren nach Anspruch 1, bei dem der während des Blasverfahrens der Flasche gebildete Flaschenkörperteil, der dicker als die anderen Körperteile ist, eine Absetz- oder Niederschlagslinie (1e) ist.

3. Flaschenherstellungsvorrichtung zum Herstellen einer Flasche durch das Verfahren nach Anspruch 1, **gekennzeichnet durch**
eine Kühleinrichtung (6, 8) zum Kühlen eines Teils (1e) des Körpers (1c) der Flasche (1), wobei der Teil (1c) dicker als die anderen Teile des Körpers ist; und
eine Erwärmungseinrichtung (5, 7) zum gleichzeitigen Erwärmen der anderen Teile des Körpers, des Halses, der Schulter und des Bodens.

4. Flaschenherstellungsvorrichtung nach Anspruch 3, bei der die Kühleinrichtung (6) auf einem Niveau angeordnet ist, das dem einer Absetz- oder Niederschlagslinie (1e) entspricht, die im Körper (1c) der Flasche (1) ausgebildet ist.

5. Flaschenherstellungsvorrichtung nach Anspruch 3 oder 4, bei der eine Flaschenbeschichtungskammer (111d) vorgesehen ist;
eine Blaskammer (111b) in der Nähe der Flaschenbeschichtungskammer (111d) angeordnet ist;
eine Saugkammer (111c) in der Nähe der Flaschenbeschichtungskammer (111d) angeordnet ist; und
ein Umlüfter (112) zwischen der Blaskammer (111b) und der Saugkammer (111c) angeordnet ist, um ein Arbeitsgas sequentiell durch die Blaskammer (111b), die Flaschenbeschichtungskammer (111d) und die Saugkammer (111c) hindurch umzuwälzen oder umlaufen zu lassen; und
wobei die Blaskammer (111b) mit einer Blasöffnung (114) versehen ist, die hin zur Flaschenbeschichtungskammer (111d) offen ist, wobei die Saugkammer (111c) mit einer Saugöffnung (115) versehen ist, die hin zur Flaschenbeschichtungskammer (111d) offen ist, und die Blasöffnung (114) der Blaskammer auf einem Niveau unterhalb eines Niveaus liegt, das dem Schwerpunkt der Flasche (1) entspricht.

6. Flaschenherstellungsvorrichtung nach Anspruch 5, bei der die Gesamtfläche der Blasöffnung (114) in einem Bereich von 3000 bis 30000 mm² liegt.

7. Flaschenherstellungsvorrichtung nach Anspruch 5 oder 6, bei der die Saugöffnung (115) eine sich horizontal längs erstreckende Form aufweist und die Fläche der Saugöffnung etwa 3 bis 20 mal die Fläche der Blasöffnung (114) beträgt.

8. Flaschenherstellungsvorrichtung nach Anspruch 5, 6 oder 7, bei welcher der Umlüfter (112) dazu ausgelegt ist, Arbeitsgas durch die Blasöffnung hindurch mit einer Strömungsgeschwindigkeit in einem Bereich von 5 bis 20 m³/min. blasen kann.

9. Flaschenherstellungsvorrichtung nach einem der Ansprüche 5 bis 8, bei der die Blaskammer (111b) und die Saugkammer (111c) einander gegenüberliegend auf jeweils gegenüberliegenden Seiten der Flaschenbeschichtungskammer (111d) angeordnet sind.

10. Flaschenherstellungsvorrichtung nach einem der Ansprüche 5 bis 9, bei der eine weitere Blaskammer und eine weitere Saugkammer vorgesehen sind, wobei jede Saugkammer über der Blaskammer liegt, die der Saugkammer zugeordnet ist, um eine Kammeranordnung zusammen mit der Blaskammer zu bilden, wobei die Kammeranordnungen einander gegenüberliegend auf jeweils gegenüberliegenden Seiten der Flaschenbeschichtungskammer angeordnet sind.

## Revendications

1. Procédé de fabrication de bouteilles pour fabriquer une bouteille (1) ayant un col (1a), un épaulement (1b), un corps (1c) et un fond (1d), par moulage par soufflage, **caractérisé par** les étapes consistant à
refroidir une partie (1e) du corps (1c) de la bouteille (1) encore chaude après le moulage par soufflage précédent qui présente une épaisseur supérieure à celle des autres parties du corps après que la bouteille a été façonnée ; et chauffer simultanément les autres parties du corps, le col, l'épaulement et le fond, de sorte que la distribution des températures de surface de bouteille se trouve dans une plage de températures souhaitée.

2. Procédé de fabrication de bouteilles selon la revendication 1, dans lequel la partie du corps de la bouteille façonnée pendant le moulage par soufflage de la bouteille, qui présente une épaisseur supérieure à celle des autres parties du corps, est une ligne de remplissage (1e).

3. Dispositif de fabrication de bouteilles pour fabriquer une bouteille par un procédé selon la revendication 1, **caractérisé par**
des moyens de refroidissement (6, 8) pour refroidir une partie (1e) du corps (1c) de la bouteille (1), ladite partie (1c) présentant une épaisseur supérieure à celle des autres parties du corps ; et des moyens de chauffage (5, 7) pour chauffer simultanément les autres parties du corps, le col, l'épaulement et le fond.

4. Dispositif de fabrication de bouteilles selon la revendication 3, dans lequel les moyens de refroidissement (6) sont disposés sur un niveau correspondant à celui d'une ligne de remplissage (1e) formée dans le corps (1c) de la bouteille (1).

5. Dispositif de fabrication de bouteilles selon la revendication 3 ou 4, dans lequel une chambre de revêtement de bouteille (111d) est prévue ;
une chambre de soufflage (111b) est disposée à proximité de la chambre de revêtement de bouteille (111d) ;
une chambre d'aspiration (111c) est disposée à proximité de la chambre de revêtement de bouteille (111d) ; et
une soufflerie rotative (112) est disposée entre la chambre de soufflage (111b) et la chambre d'aspiration (111c) pour faire circuler un gaz de transformation de façon séquentielle à travers la chambre de soufflage (111b), la chambre de revêtement de bouteille (111d) et la chambre d'aspiration (111c) ; et
dans lequel la chambre de soufflage (111b) est prévue avec un orifice de soufflage (114) s'ouvrant sur la chambre de revêtement de bouteille (111d), la chambre d'aspiration (111c) est prévue avec un orifice d'aspiration (115) s'ouvrant sur la chambre de revêtement de bouteille (111d) et l'orifice de soufflage (114) de la chambre de soufflage se trouve à un niveau au-dessous d'un niveau correspondant au centre de gravité de la bouteille (1).

6. Dispositif de fabrication de bouteilles selon la revendication 5, dans lequel la somme de la superficie de l'orifice de soufflage (114) se situe dans la plage de 3000 à 30000 mm².

7. Dispositif de fabrication de bouteilles selon la revendication 5 ou 6, dans lequel l'orifice d'aspiration (115) présente une forme horizontalement allongée, et la superficie de l'orifice d'aspiration se situe dans la plage de 3 à 20 fois celle de l'orifice de soufflage (114).

8. Dispositif de fabrication de bouteilles selon la revendication 5, 6 ou 7, dans lequel la soufflerie rotative (112) a une capacité pour souffler un gaz de transformation à travers l'orifice de soufflage à un débit dans la plage de 5 à 20 m³/mn.

9. Dispositif de fabrication de bouteilles selon l'une quelconque des revendications 5 à 8, dans lequel ladite chambre de soufflage (111b) et ladite chambre d'aspiration (111c) sont disposées l'une à l'opposé de l'autre sur les côtés opposés de la chambre de revêtement de bouteille (111d), respectivement.

10. Dispositif de fabrication de bouteilles selon l'une quelconque des revendications 5 à 9, dans lequel une autre chambre de soufflage et une autre chambre d'aspiration sont prévues, chaque chambre d'aspiration recouvrant la chambre de soufflage correspondant à la chambre d'aspiration pour former un ensemble de chambres avec la chambre de soufflage, et les ensembles de chambres sont disposés à l'opposé l'un de l'autre sur les côtés opposés de la chambre de revêtement de bouteille, respectivement.
